# EUROPÄISCHE PATENTSCHRIFT

(11) **EP 1 357 017 B1**
(45) Veröffentlichungstag und Bekanntmachung des Hinweises auf die Patenterteilung: **22.06.2011**
(21) Anmeldenummer: 03007481.9
(22) Anmeldetag: 07.04.2003
(51) Int. Cl.: B62D 23/00, B62D 29/00, B62D 27/02, B62D 25/04, B62D 25/08

(54) **Rahmenstruktur eines Fahrzeugs**
Vehicle spaceframe
Chassis de véhicule en treillis

(30) Priorität: 25.04.2002 DE 20206524 U
(43) Veröffentlichungstag der Anmeldung: 29.10.2003
(73) Patentinhaber: Wilhelm Karmann GmbH, 49084 Osnabrück (DE)
(72) Erfinder: Dogan, Hamdi, 49082 Osnabrück (DE)
(74) Vertreter: Kronthaler, Schmidt & Coll.

(56) Entgegenhaltungen:
- WO-A-01/81155
- US-A- 4 355 844
- US-A- 5 720 092

## Beschreibung

Die Erfindung betrifft eine Rahmenstruktur eines Fahrzeugs, insbesondere eines Kraftwagens, mit einer Knotenstruktur zwischen einem ersten, rohrartigen Rahmenteil und einem zweiten Rahmenteil nach der im Oberbegriff des Anspruches 1 näher bezeichneten Art. Eine derartige Rahmenstruktur ist aus der DE 196 53 509 A1 oder aus der US 5 720 092 bekannt.

Fahrzeugrahmen, wie der eines Kraftwagens, sind üblicherweise in Gitterrahmenbauweise ausgeführt, wobei das Gitter durch verschieden geformte Guß-, Strangpreß- und Aluminiumblechprofile gebildet wird, welche durch Knoten verbunden werden.

Bei aus der Praxis bekannten Fahrzeugkarosserien, welche mit einem sogenannten Space-Frame-Tragwerk ausgeführt sind, werden diese Knoten meist durch separate Knotenelemente gebildet, an die wenigstens zwei miteinander zu verbindende Rahmenteile mit ihren Stirnseiten fest angebunden werden.

Solche separate Knotenelemente werden in unterschiedlichen Herstellungsprozessen gefertigt, so z. B. als Gußknotenelemente, wie sie in der EP 0 671 312 A1 beschrieben sind, oder als stranggepreßte Leichtmetallprofile gemäß der DE 44 07 501 A1 oder auch als mechanisiert vorgefertigte Faser-Vorformlinge mit einer dreidimensional durchlaufenden Faserstruktur und Aufnahmetaschen für die zugehörigen Rahmenprofilteile, wie es in der DE 44 23 642 C1 beschrieben ist.

Eine besonders kosten- und gewichtsgünstige Herstellung, vor allem unter Verwendung von Knotenelementen aus Stahl, bei maßgenauen Verbindungen ermöglichen nach einem Innenhochdruck-Umformverfahren hergestellte Knotenelemente, wie sie die DE 196 53 509 A1 offenbart. Die darin beschriebenen Knotenelemente, welche zum Anschluß an vorprofilierte Rohrprofile vorgesehen sind, sind geschlossen verformte Bauteile aus Stahlblech, welche mit Hilfe eine durch Flüssigkeit aufgebrachten Innenhochdrucks derart verformt sind, daß sie wenigstens einen Anschlußstutzen für ein vorprofiliertes Rahmenteil ausbilden.

Wenngleich diese Knotenelemente bezüglich ihrer Herstellungsweise den zuvor beschriebenen Knotenelementen überlegen sind, so ist bei ihrer Verwendung in einer Rahmenstruktur eines Fahrzeugs nachteilig, daß bei einer derartigen Anbindung eines Rahmenteils an ein hochbeanspruchtes Trägerelement letzteres durch die Knotenverbindung unterbrochen und somit erheblich geschwächt wird. Aufgrund der großen Zahl an erforderlichen Verbindungsbereichen, weist eine derart aufgebaute Rahmenstruktur zahlreiche Schwachstellen auf, abgesehen von dem erheblichen Fertigungsaufwand, der zur Herstellung einer solchen Rahmenstruktur erforderlich ist.

Insbesondere bei der Ausgestaltung der Knotenelemente als Innenhochdruck-Umformelemente gemäß der DE 196 53 509 A1 bestimmt ein an dem Knotenelement ausgeformter Anschlußstutzen die erforderliche Wandstärke des gesamten Halbzeuges, an dem dieser ausgebildet wird.

In der US 5,720,092 ist ein Fahrzeugrahmen offenbart, bei dem T- oder C-förmige Rohrteile als Knotenverbindungen zwischen Rohren dienen. Die Knotenelemente, welche zur Aufnahme der Enden der Rohre vorgesehen sind, sind durch Innenhochdruck-Umformen gebildet und stellen separate Bauteile dar, welche mit den angrenzenden Rohren zusammengesteckt und verschweißt werden. Der hierbei geschaffene anfängliche, rohe Rahmen wird anschließend in eine Hohlform eines sogenannten Hydroformingwerkzeuges eingelegt und von innen mit Flüssigkeitsdruck beaufschlagt, wodurch die Elemente des Rahmens an die angrenzende Wandung der Hohlform gedrückt werden und ihre endgültige Oberflächengestaltung erhalten.

Nachteilhafterweise sind auch bei dieser bekannten Rahmenkonstruktion die Übergänge zwischen den T- oder C-förmigen Knotenelementen und den an dessen Enden angesetzten Rohren problematisch hinsichtlich der Belastbarkeit der Rahmenstruktur.

Die US 6,241,310 B1 beschreibt einen Fahrzeugrahmen, aufweisend ein erstes rohrartiges Rahmenteil mit einem Knotenbereich, welcher sich gewinkelt von einer Längsachse des rohrförmigen Rahmenteils weg erstreckt und durch ein sogenanntes Hydroforming, d.h. ein Innenhochdruck-Umformen durch Flüssigkeit, ausgeformt ist. Dieser Knotenbereich stellt einen Anschlußstutzen dar, auf den ein zweites, eine entsprechende Öffnung aufweisendes Rahmenteil aufgesteckt und mit diesem fest verbunden wird.

Diese bekannte Lösung vermeidet die Verwendung eines separaten Knotenelementes zur Ausbildung einer Knotenstruktur, jedoch ist die Ausformung des Anschlußstutzens aus dem betreffenden Rahmenteil mittels Innenhochdruck-Umformen insbesondere bei hoch beanspruchten Trägerelementen problematisch, da dies zu einer Schwächung des Trägerelements führt.

Es ist Aufgabe der vorliegenden Erfindung, eine Rahmenstruktur eines Fahrzeuges, insbesondere eines Kraftwagens, zu schaffen, bei der eine Knotenstruktur zwischen einem ersten, rohrartigen Rahmenteil und einem zweiten Rahmenteil mit einer möglichst geringen Anzahl an Komponenten realisiert wird, und wobei eine den zu erwartenden Belastungen ausreichend angepaßte und dennoch leicht ausgeführte Rahmenstruktur erzielt wird.

Diese Aufgabe wird erfindungsgemäß mit einer Rahmenstruktur gemäß den in Anspruch 1 ausgeführten Merkmalen gelöst.

Eine erfindungsgemäß ausgestaltete Rahmenstruktur eines Fahrzeugs, bei der wenigstens ein Anschlußstutzen zur Anbindung wenigstens eines zweiten Rahmenteils an einem ersten Rahmenteil ein Innenhochdruck-Umformelement darstellt, welches aus einem umfangsseitig auf das erste, rohrartige Rahmenteil aufgebrachten Blechbauteil ausgebildet ist, wobei der erste, rohrartige Rahmenteil im Bereich des den Anschlußstutzen bildenden Blechbauteiles mit wenigstens einer umfangseitigen Öffnung ausgebildet ist, mittels der das Blechbauteil zur Ausbildung des Anschlußstutzens mit einem in das rohrartige Rahmenteil eingebrachten Innenhochdruck beaufschlagbar ist, hat den Vorteil, daß das erste Rahmenteil nicht durch eine Trennung geschwächt wird, womit es wesentlich höhere Belastungen als ein zur Bildung des Anschlußstutzens bzw. einer Knotenstruktur mit einem Knotenelement unterbrochenes Rahmenteil aufnehmen kann. Bei der Rahmenstruktur nach der Erfindung wird nicht nur eine Schwächung des ersten, rohrförmigen Rahmenteils vermieden, sondern vielmehr wird durch die umfangsseitige Aufbringung des zur Ausbildung des Anschlußstutzens vorgesehenen Blechbauteils eine Verstärkung der Rahmenstruktur im Bereich der Knotenstruktur erzielt.

Des weiteren ist bei der erfindungsgemäß gestalteten Rahmenstruktur vorteilhaft, daß mit der solchermaßen realisierten Knotenstruktur die Wandstärke des ersten, rohrartigen Rahmenteils nicht beeinträchtigt wird.

Grundsätzlich ist bei der Rahmenstruktur nach der Erfindung eine Abstimmung der erforderlichen individuellen Wandstärke des ein Grundelement darstellenden ersten, rohrförmigen Rahmenteils und des wenigstens einen Anschlußstutzen möglich. Dabei kann die Abstimmung der Wandstärken einerseits hinsichtlich der Gewichtsoptimierung der Rahmenstruktur des Fahrzeugs vorgenommen werden und andererseits hinsichtlich der bei den einzelnen Rahmenteilen zu erwartenden Belastungen.

Fertigungstechnisch zeichnet sich'die Rahmenstruktur nach der Erfindung durch die geringe Zahl der benötigten Komponenten und ihre einfache, kostengünstige Herstellbarkeit aus, wobei die Anschlußstutzen zur Anbindung von Rahmenteilen beliebigen Profils geeignet sind. Sowohl das erste rohrförmige Rahmenteil als auch das anzuschließende zweite Rahmenteil können hinsichtlich ihrer Querschnittsform, beliebig, zum Beispiel in Ovalform, kreisförmig, rechteckig oder in anderen Formgebungen, ausgebildet sein.

Bei einer vorteilhaften Ausgestaltung der Rahmenstruktur nach der Erfindung ist das Blechbauteil zur Ausbildung des Anschlußstutzens als ein Rohr ausgeführt, welches das erste, rohrartige Rahmenteil wenigstens im Bereich der Knotenstruktur umschließt. Bei einer solchen Ausführung ist eine besonders hohe Festigkeit im Bereich der Knotenstruktur gegeben.

Bei einer geringeren zu erwartenden Belastung kann es jedoch auch ausreichend sein, daß das Blechbauteil das erste, rohrartige Rahmenteil auf dessen Umfang lediglich bereichsweise umschließt.

Die Herstellung der Knotenstruktur mittels einer Innenhochdruck-Umformung, bei der in das erste, rohrartige Rahmenteil ein Innenhochdruck vorzugsweise durch ein Fluid eingebracht wird, der über eine geeignete umfangsseitige Öffnung auf das Blechbauteil übertragen wird und so eingestellt ist, daß das Material des Blechbauteils gegen eine eine Form des Anschlußstutzens vorgebende Wandung eines Innenhochdruck-Umformwerkzeuges gepreßt wird, kann vorteilhafterweise auch zur Ausbildung einer festen Verbindung mit dem zweiten, an den Anschlußstutzen anzubindenden Rahmenteil genutzt werden. Wenn das zweite, anzubindende Rahmenteil mit einer entsprechenden Öffnung zur Aufnahme des Anschlußstutzens in dem Innenhochdruck-Umformungswerkzeug bei der Ausbildung des Anschlußstutzens aus dem Blechbauteil angeordnet ist, kann das Blechbauteil in einem Arbeitsgang in die besagte Öffnung des zweiten Rahmenteils eingepreßt werden.

Weitere Vorteile und vorteilhafte Ausgestaltungen des Gegenstandes nach der Erfindung sind den Ansprüchen, der Beschreibung und der Zeichnung entnehmbar.

Mehrere Ausführungsbeispiele einer erfindungsgemäßen Rahmenstruktur sind in der Zeichnung schematisch vereinfacht dargestellt und werden in der nachfolgenden Beschreibung näher erläutert.

Es zeigt:
- Fig. 1: einen Teil einer Rahmenstruktur einer Fahrzeugkarosserie in einer Seitenansicht;
- Fig. 2: ein rohrartiges Rahmenteil im Bereich einer Knotenstruktur gemäß einem Ausschnitt X in Fig. 1 mit einem das rohrartige Rahmenteil umschließenden Blechbauteil, wobei ein Zustand vor Ausbildung eines Anschlußstutzens aus dem Blechbauteil durch eine Innenhochdruck-Umformung dargestellt ist;
- Fig. 3: einen Längsschnitt durch das rohrartige Rahmenteil und das dieses umgebende Blechbauteil gemäß Fig. 2;
- Fig. 4: das Rahmenteil mit dem Blechbauteil nach Fig. 2 und Fig. 3, wobei hier ein Zustand nach Ausbildung des Anschlußstutzens aus dem Blechbauteil dargestellt ist;
- Fig. 5: eine Darstellung des rohrartigen Rahmenteils und des einen Anschlußstutzen bildenden Blechbauteils gemäß Fig. 4 im Längsschnitt;
- Fig. 6: eine weitere Ausführung einer Knotenstruktur mit einem rohrförmigen Rahmenteil, welches umfangsseitig bereichsweise ein Blechbauteil umschließt, wobei ein Zustand vor Ausbildung eines Anschlußstutzens aus dem Blechbauteil durch Innenhochdruck-Umformung dargestellt ist;
- Fig. 7: das Rahmenteil und das Blechbauteil nach Fig. 6, wobei hier ein Zustand nach Ausbildung des Anschlußstutzens aus dem Blechbauteil dargestellt ist.

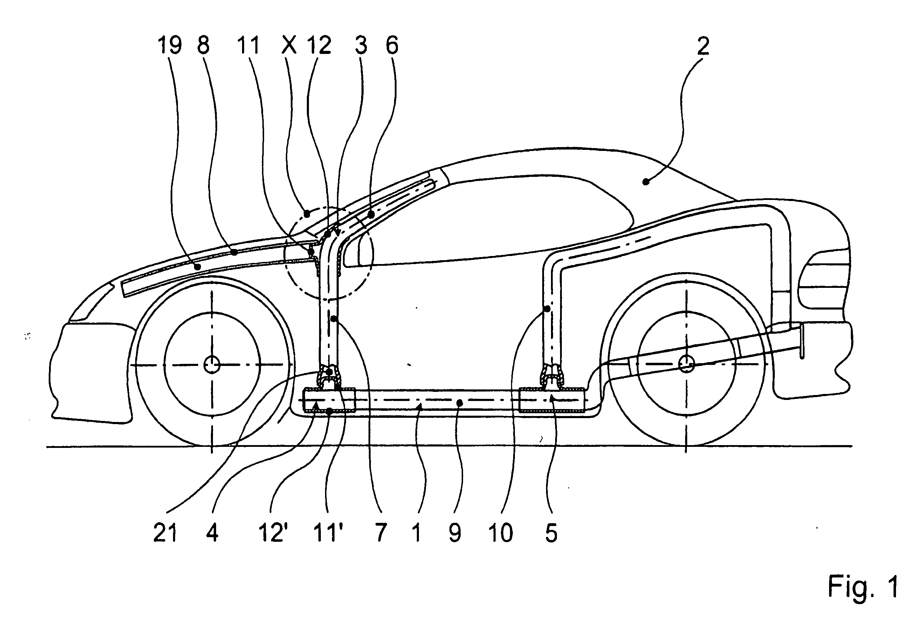

In Fig. 1 ist schematisch ein Teil einer Rahmenstruktur 1 eines ein Cabriolet-Kraftfahrzeug darstellenden Kraftwagens 2 gezeigt, wobei exemplarisch drei Knotenstrukturen 3, 4, 5 dargestellt sind, von denen eine erste Knotenstruktur 3 zwischen einer A-Säule 7 des Cabriolet-Kraftfahrzeugs im Bereich einer Abwinklung zu einem Windschutzscheibenrahmen 6 angeordnet ist und eine Verbindung zwischen einem ersten, rohrartigen, die A-Säule bildenden Rahmenteil 7 und einem zweiten, einen Motorhaubenrahmen begrenzenden Rahmenteil 8 bildet. Eine zweite Knotenstruktur 4 bildet eine Verbindung zwischen dem die A-Säule bildenden Rahmenteil 7 und einem rohrartigen mit einem Hohlprofil ausgebildeten Fahrzeuglängsträger bzw. Seitenschweller 9, während die dritte gezeigte Knotenstruktur 5 eine Verbindung zwischen dem Fahrzeuglängsträger 9 und einer heckseitig einer Fahrzeugtür angeordneten B-Säule 10 des Fahrzeuges schafft.

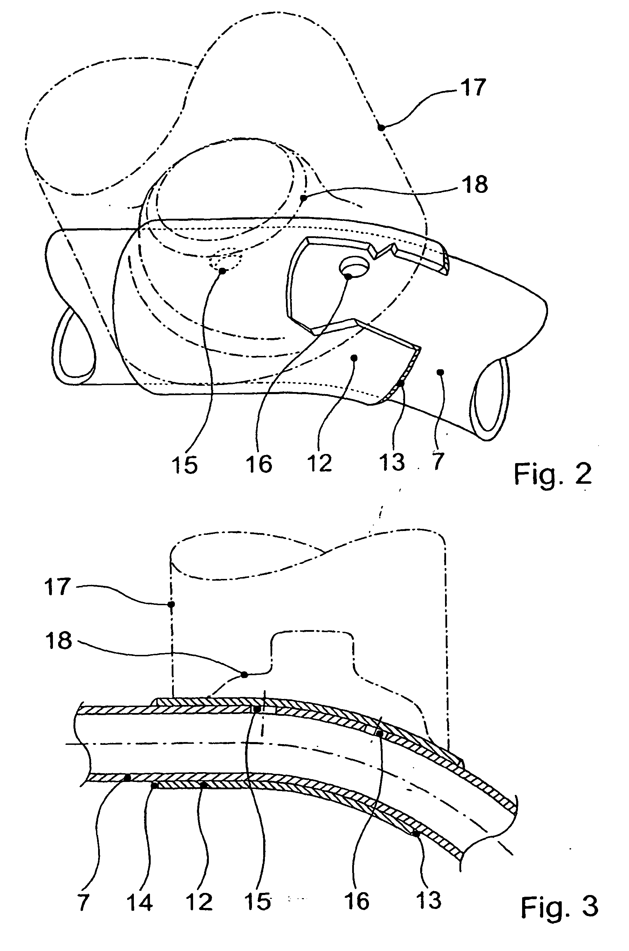

In der Fig. 2 bis Fig. 5 ist in einer vergrößerten Darstellung gemäß einem in Fig. 1 dargestellten Bereich X das die A-Säule darstellende rohrartige Rahmenteil 7 und ein umfangsseitig auf das rohrartige Rahmenteil 7 aufgebrachtes Blechbauteil 12 zur Ausbildung eines Anschlußstutzens 11 in unterschiedlichen Fertigungsstadien näher gezeigt.

Die Fig. 2 zeigt das rohrartige Rahmenteil 7 und das dieses ummantelnde, teilweise im Ausbruch dargestellte Blechbauteil 12 als Halbzeug zur Ausbildung des Anschlußstutzens 11 vor einer Innenhochdruck-Umformung des Blechbauteils 12 mittels Hydroforming. Das hier ebenfalls ein Rohrstück darstellende Blechbauteil 12 ist in dem Bereich des auszubildenden Anschlußstutzens 11 positioniert und an seinen Enden mit dem rohrartigen Rahmenteil 7 über Schweißverbindungen 13, 14 wasserdicht verbunden. Anstelle der Schweißverbindungen 13, 14 können in einer anderen Ausführung auch andere Verbindungsarten, wie z. B. Klebeverbindungen, vorgesehen sein.

Die gebogene Form dieser Bauteilgruppierung wird durch eine Biegung des ersten rohrartigen Rahmenteils 7 zusammen mit dem Blechbauteil 12 vor Ausbildung des Anschlußstutzens 11 erzeugt.

Zur Druckübertragung eines in den Hohlraum des rohrartigen Rahmenteils 7 eingebrachten Flüssigkeitsdruckes auf das Blechbauteil 12 sind bei der vorliegenden Ausführung im Bereich des auszubildenden Anschlußstutzens zwei umfangsseitige Öffnungen 15 und 16 vorgesehen, welche Durchgangsbohrungen darstellen. Die Öffnungen 15, 16 können in weiteren Ausführungen selbstverständlich auch auf eine andere für den jeweiligen Anwendungsfall geeignete Art und Weise in das rohrartige Rahmenteil 7 eingebracht werden.

Das so vorgebogene bzw. vorbereitete Halbzeug wird nun in ein Innenhochdruck-Umformwerkzeug 17, welches in Fig. 2 und Fig. 3 strichliert angedeutet ist, eingelegt, wobei das erste rohrartige Rahmenteil 7 im Bereich des auszubildenden Anschlußstutzens 11 als auch das darauf aufgebrachte Blechbauteil 12 in deren Randbereich von dem Innenhochdruck-Umformwerkzeug 17 unmittelbar umschlossen wird. Der Bereich des auszubildenden Anschlußstutzens 11 ist in dem Innenhochdruck-Umformwerkzeug 17 als Hohlraum mit einer die Kontur des Anschlußstutzens vorgebenden Wandung 18 ausgebildet.

Da durch das Innenhochdruck-Umformwerkzeug 17, welches in üblicher Weise zweiteilig ausgeführt ist, ein an den zu verformenden Bereich angrenzender Bereich während des Umformprozesses festgehalten wird, wird ein Aufreißen der Schweißverbindungen 13, 14 oder einer anderen hier vorgesehenen Verbindung sicher vermieden.

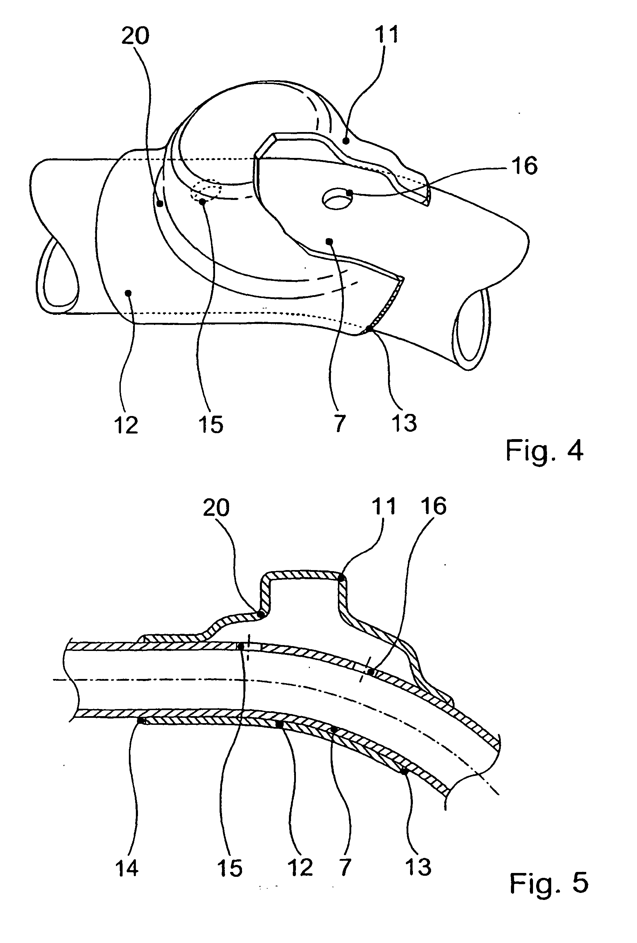

In Fig. 4 und Fig. 5 ist der Anschlußstutzen 11 nach dem Hydroforming dargestellt, wobei die Außenkontur des Anschlußstutzens 11 für die Anbindung des weiteren Rahmenteils 8 geeignet ausgebildet ist. Diese Verbindung ist hier als eine in Fig. 1 näher ersichtliche Steckverbindung ausgeführt, bei der der Anschlußstutzen 11 in einen Hohlraum 19 des Rahmenteils 8 bis zu einer Abwinkelung 20 an der Außenkontur des Anschlußstutzens 11 eingeschoben wird, so daß die Außenkontur der Knotenstruktur 3 im wesentlichen glatt ist. Bei der hier beschriebenen Knotenstruktur 3 ist das Rahmenteil 8 an dem Anschlußstutzen 11 über nicht näher dargestellte Schweißnähte befestigt.

Es versteht sich, daß eine solche glatte Außenkontur auch durch andere entsprechende Absätze an den zu verbindenden Bauteilen erzeugbar ist, und daß durch sich verjüngende Querschnitte wie im vorliegenden Fall ein Toleranzausgleich beim Zusammenstecken der zu verbindenden Bauteile möglich ist. Da bei einem Hydroforming sehr präzise Konturen erreicht werden, ist in der Regel nach dem Innenhochdruck-Umformen ein Anschlußbereich für Schweißungen oder Verklebungen bereitgestellt, welcher keiner spanenden Nachbearbeitung bedarf.

Bei den Knotenstrukturen 4 und 5, welche vorliegend identisch ausgeführt sind, ist jeweils ein bezüglich der Knotenstruktur 4 näher bezeichnetes Blechbauteil 12` auf dem rohrartigen Fahrzeuglängsträger 9 aufgebracht, wobei jeweils ein Anschlußstutzen 11` in oben beschriebener Weise aus dem Blechbauteil 12` mittels Hydroforming ausgebildet wird.

Das bei der Knotenstruktur 4 hieran anzubindende A-Säule-Rahmenteil 7 ist über eine Preßverbindung mit dem Anschlußstutzen 11` verbunden, wobei die Preßverbindung hier während des Hydroforming des Anschlußstutzens 11` hergestellt ist. Wie hier ist es bei allen Knotenstrukturen der Rahmenstruktur 1 möglich, ein an einen Anschlußstutzen anzubindendes Rahmenteil in das Innenhochdruck-Umformwerkzeug mit einzulegen, so daß sich der Anschlußstutzen gegen eine Innenseite des anzubindenden Rahmenteiles während des Umformprozesses ausbildet und eine Klemmverbindung mit dem anzubindenden Rahmenteil herstellt.

Bei den in Fig. 1 gezeigten Knotenstrukturen 3, 4, 5 ist jeweils der Anschlußstutzen 11, 11` in einen Hohlraum 19 bzw. 21 eingesetzt, jedoch ist es in weiteren Ausführungen selbstverständlich auch möglich, daß das anzubindende Rahmenteil in eine bei dem Anschlußstutzen ausgeformte Aussparung eingesetzt wird.

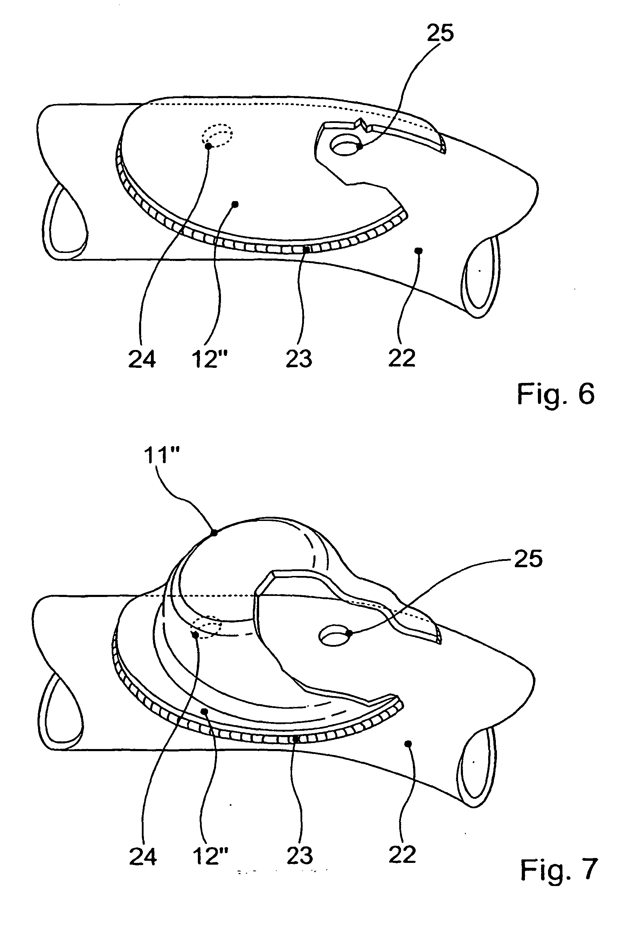

Abweichend von den in den Fig. 1 bis Fig. 5 gezeigten Ausbildungen eines Anschlußstutzens aus einem auf ein rohrartiges Rahmenteil aufgebrachten, selbst ein Rohr darstellenden Blechbauteil kann es nach einer in Fig. 6 und Fig. 7 näher gezeigten Ausgestaltungsvariante auch vorgesehen sein, daß ein Anschlußstutzen 11' ' durch Hydroforming aus einem Blechbauteil 12' ' geformt wird, welches ein rohrartiges Rahmenteil 22 auf dessen Umfang nur bereichsweise umschließt.

Wie den Fig. 6 und Fig. 7 zu entnehmen ist, ist das Blechbauteil 12`` auch bei der hier gezeigten Ausführung mittels einer durchgehenden, wasserdichten Schweißnaht 23 auf dem rohrartigen Rahmenteil 22 befestigt. Das rohrartige Rahmenteil 22 weist wiederum zwei Durchgangsbohrungen 24, 25 auf, welche den Durchtritt von flüssigem Druckmittel an das Blechbauteil 12 ' ' während eines Hydroforming-Prozesses zur Ausbildung des Anschlußstutzens 11`` erlauben.

Die Wahl der Gestaltung der Knotenstruktur, welche in weiteren Ausführungen beispielsweise auch mit zwei Anschlußstutzen ausgeführt sein kann, richtet sich nach den zu erwartenden maximalen Belastungen an den betreffenden Rahmenteilen. Während beispielsweise im Bereich der Knotenstruktur 3 eine in den Fig. 1 bis Fig. 5 gezeigte Ausgestaltung des zur Ausbildung des Anschlußstutzens dienenden Blechbauteiles in Rohrform sowie vergleichsweise hohe Wandstärken vorzuziehen sind, da es sich bei einem Abwinkelungsbereich der A-Säule hin zu einem Windschutzscheibenrahmen bei Cabriolet-Fahrzeugen um einen sicherheitstechnisch kritischen Bereich handelt, welcher der Überrollschutz-Funktion des Windschutzscheibenrahmens im Falle einer Verunfallung des Fahrzeugs entsprechend ausgelegt sein muß, kann für Knotenstrukturen, bei denen eine geringere maximale Belastung zu veranschlagen ist, auch eine dünnere Wandung und ein Blechbauteil zur Ausbildung eines Anschlußstutzens gemäß der in Fig. 5 und Fig. 6 gezeigten Ausführung Anwendung finden.

Der Fachmann wird je nach zu erwartender Beanspruchung auch die geeigneten Materialien und die Art der Befestigungsmittel wählen, welche beispielsweise eine Schweißverbindung, mechanische Verbindungsmittel wie Schrauben oder Nieten, oder aber chemische Befestigungsmittel wie Klebstoff, sein können. Bei besonders stark beanspruchten Knotenstrukturen bleibt es dem Fachmann überlassen, gegebenenfalls auch eine Ausschäumung der vorhandenen Hohlräume mit Hartschaum zur Erhöhung der Steifigkeit vorzusehen.

Bei den beschriebenen Anwendungsfällen sind die jeweiligen Anschlußstutzen als auch die Form der Rahmenteile im Querschnitt und zumindest zum Teil auch in Längsrichtung mittels Hydroforming hergestellt. Dabei ist es denkbar, daß die gesamte Rahmenstruktur eines Kraftwagens mittels Hydroforming hergestellt ist, wobei auch eine zusätzliche Formgebung der Rahmenteile außerhalb des Anschlußstutzenbereiches durch gegebenenfalls weitere bekannte Fertigungstechniken erfolgen kann.

Die beschriebenen Ausführungsvarianten beziehen sich auf das bevorzugte Anwendungsgebiet einer Rahmenstruktur eines Kraftwagens wie hier eines Cabriolet-Kraftfahrzeugs, jedoch kann eine erfindungsgemäß ausgestaltete Rahmenstruktur auch bei anderen Fahrzeugen in angepaßter Form Anwendung finden, wie beispielsweise bei Eisenbahnen, bei Flugzeugen oder Fahrrädern.

## Patentansprüche

1. Rahmenstruktur eines Fahrzeugs, insbesondere eines Kraftwagens, mit einer Knotenstruktur zwischen einem ersten, rohrartigen Rahmenteil und einem zweiten Rahmenteil, wobei wenigstens ein Anschlußstutzen zur Anbindung wenigstens des zweiten Rahmenteils an dem ersten Rahmenteil als ein Innenhochdruck-Umformelement ausgebildet ist,
**dadurch gekennzeichnet,**
**daß** der wenigstens eine Anschlußstutzen (11; 11'; 11") aus einem umfangsseitig auf das erste, rohrartige Rahmenteil (7; 9; 22) aufgebrachten Blechbauteil (12; 12'; 12") ausgebildet ist, wobei das erste, rohrartige Rahmenteil (7; 9; 22) im Bereich des den Anschlußstutzen (11; 11'; 11") bildenden Blechbauteiles (12; 12'; 12") mit wenigstens einer umfangsseitigen Öffnung (15, 16; 24, 25) ausgebildet ist, mittels der das Blechbauteil (12; 12'; 12") zur Ausbildung des Anschlußstutzens (11; 11'; 11") mit einem in das rohrartige Rahmenteil (7; 9; 22) eingebrachten Innenhochdruck beaufschlagbar ist.

2. Rahmenstruktur nach Anspruch 1,
**dadurch gekennzeichnet,**
**daß** das Blechbauteil (12; 12'; 12") mit dem ersten, rohrartigen Rahmenteil (7; 9; 22) randseitig fest verbunden ist.

3. Rahmenstruktur nach Anspruch 2,
**dadurch gekennzeichnet,**
**daß** die Verbindung zwischen dem Blechbauteil (12; 12'; 12") und dem ersten, rohrartigen Rahmenteil (7; 9; 22) dichtend ist.

4. Rahmenstruktur nach Anspruch 2 oder 3,
**dadurch gekennzeichnet,**
**daß** das Blechbauteil (12; 12'; 12") mit dem ersten, rohrartigen Rahmenteil (7; 9; 22) mittels einer Schweißverbindung (13, 14; 23) verbunden ist.

5. Rahmenstruktur nach einem der Ansprüche 1 bis 4,
**dadurch gekennzeichnet,**
**daß** das Blechbauteil (12; 12') als ein Rohr ausgebildet ist, welches das erste, rohrartige Rahmenteil (7; 9) wenigstens im Bereich der Knotenstruktur (3; 4) vollständig umschließt.

6. Rahmenstruktur nach einem der Ansprüche 1 bis 4,
**dadurch gekennzeichnet,**
**daß** das Blechbauteil (12") das erste, rohrartige Rahmenteil (22) auf dessen Umfang nur bereichsweise umschließt.

7. Rahmenstruktur nach einem der Ansprüche 1 bis 6,
**dadurch gekennzeichnet,**
**daß** die wenigstens eine umfangsseitige Öffnung als Durchgangsbohrung (15, 16; 24, 25) ausgebildet ist.

8. Rahmenstruktur nach einem der Ansprüche 1 bis 7,
**dadurch gekennzeichnet,**
**daß** das erste, rohrartige Rahmenteil (7; 9; 22) zusammen mit dem aufgebrachten Blechbauteil (12; 12'; 12") vor der Innenhochdruck-Umformung vorgebogen ist.

9. Rahmenstruktur nach einem der Ansprüche 1 bis 8,
**dadurch gekennzeichnet,**
**daß** wenigstens der Anschlußstutzen (11; 11'; 11") ein Hydroforming-Element darstellt.

10. Rahmenstruktur nach einem der Ansprüche 1 bis 9,
**dadurch gekennzeichnet,**
**daß** wenigstens das erste, rohrartige Rahmenteil (7; 9; 22) als ein Trägerelement ausgebildet ist.

11. Rahmenstruktur nach einem der Ansprüche 1 bis 10,
**dadurch gekennzeichnet,**
**daß** das erste, rohrartige Rahmenteil ein Fahrzeuglängsträger (9) und das zweiten Rahmenteil eine Fahrzeugsäule (7, 10) darstellen.

12. Rahmenstruktur nach einem der Ansprüche 1 bis 11,
**dadurch gekennzeichnet,**
**daß** das erste, rohrartige Rahmenteil eine A-Säule (7) eines Cabriolet-Fahrzeugs darstellt, wobei die Knotenstruktur (3) in einem Knickbereich zur Ausbildung eines Windschutzscheibenrahmens (6) angeordnet ist.

13. Rahmenstruktur nach einem der Ansprüche 1 bis 12,
**dadurch gekennzeichnet,**
**daß** die Anbindung des zweiten Rahmenteils an den Anschlußstutzen (11') als eine während der Innenhochdruckumformung des Anschlußstutzens (11') hergestellte Klemmverbindung ausgeführt ist.

## Claims

1. Vehicle spaceframe, in particular for a motor vehicle, with a node structure between a first, tubular frame part and a second frame part, wherein at least one connecting piece for connecting at least the second frame part to the first frame part is provided as a hydroforming element,
**characterised in that**
the at least one connecting piece (11; 11'; 11") is formed by a sheet-metal component (12; 12'; 12") circumferentially mounted on the first, tubular frame part (7; 9; 22), said first, tubular frame part (7; 9; 22) being provided with at least one circumferential opening (15, 16; 24, 25) in the region of the sheet-metal component (12; 12'; 12") forming the connecting piece (11; 11'; 11"), through which opening (15, 16; 24, 25) a high internal pressure, introduced in the tubular frame part (7; 9; 22), can be applied to the sheet-metal component (12; 12'; 12") to form the connecting piece (11; 11'; 11").

2. The spaceframe according to claim 1, **characterised in that** the sheet-metal component (12; 12'; 12") is fixedly connected to the first, tubular frame part (7; 9; 22) at its edge.

3. The spaceframe according to claim 2, **characterised in that** the connection between the sheet-metal component (12; 12'; 12") and the first, tubular frame part (7; 9; 22) is tight.

4. The spaceframe according to claim 2 or 3, **characterised in that** the sheet-metal component (12; 12'; 12") is connected to the first, tubular frame part (7; 9; 22) by a welding joint (13, 14; 23).

5. The spaceframe according to any one of claims 1 to 4, **characterised in that** the sheet-metal component (12; 12') is provided as a tube which completely encloses the first, tubular frame part (7; 9) at least in the area of the node structure (3; 4).

6. The spaceframe according to any one of claims 1 to 4, **characterised in that** the sheet-metal component (12") encloses the first, tubular frame part (22) only partially along its circumference.

7. The spaceframe according to any one of claims 1 to 6, **characterised in that** the at least one circumferential opening is provided as a through-hole (15, 16; 24, 25).

8. The spaceframe according to any one of claims 1 to 7, **characterised in that** the first, tubular frame part (7; 9; 22) is pre-bent, together with the sheet-metal component (12; 12'; 12") mounted thereon, prior to the hydroforming operation.

9. The spaceframe according to any one of claims 1 to 8, **characterised in that** at least the connecting piece (11; 11'; 11") is a hydroforming element.

10. The spaceframe according to any one of claims 1 to 9, **characterised in that** at least the first, tubular frame part (7; 9; 22) is provided as a supporting element.

11. The spaceframe according to any one of claims 1 to 10, **characterised in that** the first, tubular frame part constitutes a vehicle longitudinal member (9) and the second frame part constitutes a vehicle pillar (7, 10).

12. The spaceframe according to any one of claims 1 to 11, **characterised in that** the first, tubular frame part constitutes an A-pillar (7) of a convertible vehicle, wherein the node structure (3) is disposed in a kinking area for forming a windscreen frame (6).

13. The spaceframe according to any one of claims 1 to 12, **characterised in that** the connection of the second frame part to the connecting piece (11') is provided as a clamping connection produced during the hydroforming operation of the connecting piece (11').

## Revendications

1. Châssis de véhicule en treillis, notamment de véhicule automobile, présentant une structure nodale entre un premier élément de châssis tubulaire et un deuxième élément de châssis, au moins une pièce de raccordement étant réalisée sous forme d'un élément d'hydroformage pour raccorder au moins le deuxième élément de châssis au premier élément de châssis,
**caractérisé en ce que**
ladite au moins une pièce de raccordement (11; 11'; 11 ") est réalisée à partir d'un composant en tôle (12; 12'; 12"), monté circonférentiellement audit premier élément de châssis tubulaire (7; 9; 22), ledit premier élément de châssis tubulaire (7; 9; 22) présentant, dans la région du composant en tôle (12; 12'; 12") constituant la pièce de raccordement (11; 11'; 11"), au moins une ouverture circonférentielle (15, 16; 24, 25) au moyen de laquelle le composant en tôle (12; 12'; 12") peut être soumis à une haute pression interne, introduite dans l'élément de châssis tubulaire (7; 9; 22), pour réaliser la pièce de raccordement (11; 11'; 11 ").

2. Châssis en treillis selon la revendication 1, **caractérisé en ce que** le composant en tôle (12; 12'; 12") est relié de manière fixe au premier élément de châssis tubulaire (7; 9; 22) du côté de son bord.

3. Châssis en treillis selon la revendication 2, **caractérisé en ce que** le raccordement entre le composant en tôle (12; 12'; 12") et le premier élément de châssis tubulaire (7; 9; 22) est étanche.

4. Châssis en treillis selon la revendication 2 ou 3, **caractérisé en ce que** le composant en tôle (12; 12'; 12") est raccordé au premier élément de châssis tubulaire (7; 9; 22) par une soudure (13, 14; 23).

5. Châssis en treillis selon l'une quelconque des revendications 1 à 4, **caractérisé en ce que** le composant en tôle (12; 12') est réalisé sous forme d'un tube qui renferme complètement le premier élément de châssis tubulaire (7; 9) au moins dans la région de la structure nodale (3; 4).

6. Châssis en treillis selon l'une quelconque des revendications 1 à 4, **caractérisé en ce que** le composant en tôle (12") ne renferme le premier élément de châssis tubulaire (22) que partiellement sur la circonférence de celui-ci.

7. Châssis en treillis selon l'une quelconque des revendications 1 à 6, **caractérisé en ce que** l'au moins une ouverture circonférentielle est réalisée sous forme d'un alésage traversant (15, 16; 24, 25).

8. Châssis en treillis selon l'une quelconque des revendications 1 à 7, **caractérisé en ce que** le premier élément de châssis tubulaire (7; 9; 22) est coudé au préalable, ensemble avec le composant en tôle (12; 12'; 12") monté sur celui-ci, avant l'hydroformage.

9. Châssis en treillis selon l'une quelconque des revendications 1 à 8, **caractérisé en ce qu'**au moins la pièce de raccordement (11; 11'; 11") est un élément réalisé par hydroformage.

10. Châssis en treillis selon l'une quelconque des revendications 1 à 9, **caractérisé en ce qu'**au moins le premier élément de châssis tubulaire (7; 9; 22) est réalisé en tant qu'élément de support.

11. Châssis en treillis selon l'une quelconque des revendications 1 à 10, **caractérisé en ce que** le premier élément de châssis tubulaire constitue un longeron de véhicule (9) et le deuxième élément de châssis constitue une colonne de véhicule (7, 10).

12. Châssis en treillis selon l'une quelconque des revendications 1 à 11, **caractérisé en ce que** le premier élément de châssis tubulaire constitue une colonne A (7) d'un cabriolet, la structure nodale (3) étant disposée dans une région de coude pour la réalisation d'un cadre de pare-brise (6).

13. Châssis en treillis selon l'une quelconque des revendications 1 à 12, **caractérisé en ce que** le raccordement du deuxième élément de châssis à la pièce de raccordement (11') se présente sous forme d'une liaison de serrage réalisée lors de l'hydroformage de la pièce de raccordement (11').
